# EUROPEAN PATENT APPLICATION

(11) **EP 3 293 615 A1**
(43) Date of publication of application: **14.03.2018**
(21) Application number: 15890163.7
(22) Date of filing: 09.10.2015
(51) Int. Cl.: G06F 3/041

(54) **IN-CELL TOUCH SCREEN AND DISPLAY DEVICE**

(30) Priority: 04.05.2015 CN 201510221655
(71) Applicant: BOE Technology Group Co., Ltd., Beijing 100015 (CN); Beijing BOE Optoelectronics Technology Co., Ltd., Beijing 100176 (CN)
(72) Inventor: ZHENG, Yi, Beijing 100176 (CN); XU, Shuai, Beijing 100176 (CN); WANG, Shikun, Beijing 100176 (CN)
(74) Representative: Klunker IP Patentanwälte PartG mbB
(86) International application number: PCT/CN2015/091548
(87) International publication number: WO 2016/176960

(57) **Abstract**

An in-cell touch panel and a display device are disclosed. The array substrate of the in-cell touch panel includes an array of first touch drive electrodes (203), an array of second touch drive electrodes (204), and a plurality of connection lines (51), and the second touch drive electrodes (204) are of a same shape and an equal size as the first touch drive electrodes (203). The connection lines (51) respectively connect the first touch drive electrodes (203) and the second touch drive electrodes (204) in a same column to form a plurality of touch drive lines (234). The counter-substrate (200) of the in-cell touch panel includes a plurality of touch sensing lines (310) that are provided at positions, corresponding to first touch drive electrodes (203), on the counter-substrate (200). The in-cell touch panel can avoid a problem of nonuniform image display and improve image quality.

## Description

### TECHNICAL FIELD

At least one embodiment of the present invention pertains to an in-cell touch panel and a display device.

### BACKGROUND

With rapid development of display technology, touch panels are becoming popular across people's lives. Touch panels include add-on touch panels and in-cell touch panels. An in-cell touch panel refers to a case that touch electrodes (such as touch sensing electrodes and touch driving electrodes) of a touch panel is integrated into a display screen, so as to obtain a touch display device that is of simple structure, high display performance and low cost, thus increasing competitiveness of a product. At present, in-cell touch panels have become dominant in the display field.

### SUMMARY

At least one embodiment of the present invention provides an in-cell touch panel that is to solve a problem of nonuniform display due to inconformity of load of touch drive electrodes and common electrodes in the in-cell touch panel, and hence improve image quality.

At least one embodiment of the present invention provides an in-cell touch panel, comprising an array substrate and a counter-substrate that is provided opposite to the array substrate. The array substrate comprises: an array of first touch drive electrodes that are insulated from each other; an array of second touch drive electrodes that are insulated from each other, wherein the array of second touch drive electrodes is insulated from the array of first touch drive electrodes, rows of first touch drive electrodes and rows of second touch drive electrodes are provided alternately one by one in a column direction, and the second touch drive electrodes are of a same shape and an equal size as the first touch drive electrodes. The array substrate further comprises a plurality of connection lines, and the plurality of connection lines respectively connect the first touch drive electrodes and the second touch drive electrodes in a same column to form a plurality of touch drive lines, with the first touch drive electrodes and the second touch drive electrodes being employed to apply common electrode signals and touch scan signals in a time-share manner. The counter-substrate comprises a plurality of touch sensing lines, and the plurality of touch sensing lines are provided at positions, corresponding to the first touch drive electrodes, on the counter-substrate.

At least one embodiment of the present invention provides a display device, comprising the in-cell touch panels above-described.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and, it is not limitative to the scope of the present invention.
Fig. 1a is a schematic top view of touch drive electrodes and a common electrode in an in-cell touch panel;
Fig.1b is a schematic view for line routing of touch drive electrodes and common electrodes in an in-cell touch panel;
Fig.2 is a schematic view for structure of an in-cell touch panel provided in an embodiment of the present invention;
Fig.3a is a schematic top view of first touch drive electrodes and second touch drive electrodes in an in-cell touch panel provided in an embodiment of the present invention;
Fig.3b is a schematic view for line routing of first touch drive electrodes and second touch drive electrodes in an in-cell touch panel provided in an embodiment of the present invention;
Fig.3c is a schematic top view of first touch drive electrodes, second touch drive electrodes and touch sensing electrodes in an in-cell touch panel provided in an embodiment of the present invention; and
Fig.4 is a schematic view for drive sequence of an in-cell touch panel provided in an embodiment of the present invention.

### DETAILED DESCRIPTION

In order to make objects, technical details and advantages of the embodiments of the invention apparent, the technical solutions of the embodiments will be described in a clearly and fully understandable way in connection with the drawings related to the embodiments of the invention. Apparently, the described embodiments are just a part but not all of the embodiments of the invention. Based on the described embodiments herein, those skilled in the art can obtain other embodiment(s), without any inventive work, which should be within the scope of the invention.

Unless otherwise defined, all the technical and scientific terms used herein have the same meanings as commonly understood by one of ordinary skill in the art to which the present invention belongs. The terms "first," "second," etc., which are used in the description and the claims of the present application for invention, are not intended to indicate any sequence, amount or importance, but distinguish various components. Also, the terms such as "a," "an," or "the," etc., are not intended to limit the amount, but indicate the existence of at least one. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the object which is described is changed, the relative position relationship may be changed accordingly.

Thickness and shape of each film layer in figures, instead of reflecting actual scale, are merely for illustration of contents of the present invention.

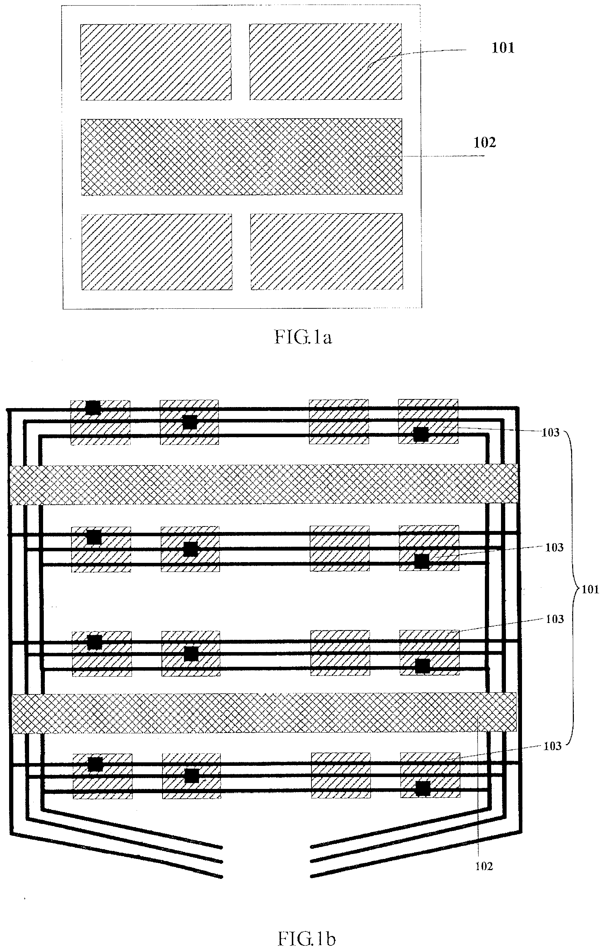

In an in-cell touch panels at present, touch function and display function may be achieved by disposing touch sensing electrodes and touch drive electrodes respectively on a color filter substrate and an array substrate of a display panel. Fig.1a and Fig.1b are schematic views for structure comprising touch drive electrodes and common electrodes. As illustrated in Fig.1a and Fig.1b, touch drive electrodes 101 are of a grid structure, with each group of the touch drive electrodes 101 being aligned in a vertical direction. Common electrodes 102 are laterally aligned in bar-shape, which separates the touch drive electrodes 101 into N pieces of touch sensing units 103. Each touch sensing unit 103 corresponds to M columns of pixels (M can be equal to or different from N). The common electrodes 102 can be provided between the touch sensing units 103.

When the in-cell touch panel is in operation, the touch drive electrodes 101 share the signals over the common electrodes 102 so that the in-cell touch panel is applied with the common electrode signals in displaying, while they are applied with drive signals in touching. However, as illustrated in Fig.1b, because the touch drive electrodes 101 are independently routed and include a plurality of plate-like touch sensing units 103 that are uniformly arranged, the resistance of routed lines is relatively large, while the common electrode is a bar-shaped electrode, the resistance of which is relatively less; the signal transmission loads of the two kinds of electrodes are not consistent with each other, hence rendering the transmission speed of the common signal over the common electrode to be inconsistent with that the transmission speed of the common signal over the touch drive electrode, which can cause nonuniform display of images and disadvantageously influence image quality.

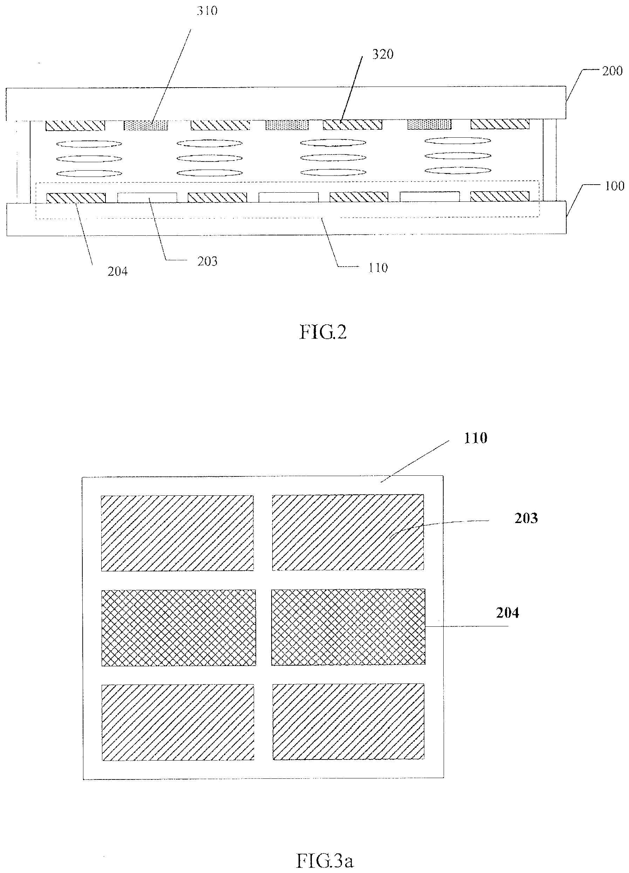

An embodiment of the present invention provides an in-cell touch panel as illustrated in Fig.2 (Fig.2 is a schematic lateral section view of an in-cell touch panel provided in an embodiment of the present invention) and the in-cell touch panel includes an array substrate 100 and a counter-substrate 200 that is provided opposite to the array substrate 100. The array substrate 100 includes a common electrode layer 110.

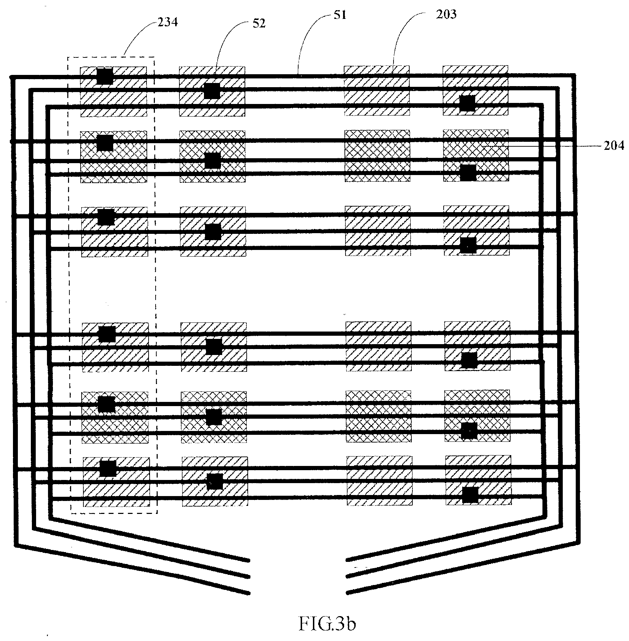

As illustrated in Fig.3a and Fig.3b, the array substrate 100 includes an array of first touch drive electrodes 203 that are insulated from each other and an array of second touch drive electrodes 204 that are insulated from each other. That is to say, an insulation layer (not illustrated in Fig.3a and Fig.3b) is provided between the first touch drive electrodes 203 to isolate them and an insulation layer (not illustrated in Fig.3a and Fig.3b) is provided between the second touch drive electrodes 204 to isolate them as well.

The array of the second touch drive electrodes 204 is insulated from the array of the first touch drive electrodes 203, that is to say, the second touch drive electrodes 204 and the first touch drive electrodes 203 are separated from each other via an insulation layer (not illustrated in Fig.3a and Fig.3b); as illustrated in Fig.3a and Fig.3b, the array of the first touch drive electrodes 203 includes rows of first touch drive electrodes 203 and the array of the second touch drive electrodes 204 includes rows of second touch drive electrodes 204 (Fig.3a merely illustrates one row of second touch drive electrodes 204); rows of the first touch drive electrodes 203 and rows of the second touch drive electrodes 204 are provided alternately one by one in a column direction, that is, one row of the second touch drive electrodes 204 is provided between two adjacent rows of the first touch drive electrodes 203, while one row of the first touch drive electrodes 203 is provided between two adjacent rows of the second touch drive electrode 204; the second touch drive electrodes 204 is of a same shape and a equal size as the first touch drive electrodes 203.

An array substrate 100 further includes a plurality of connection lines 51. The plurality of connection lines 51 each connect first touch drive electrodes 203 and second touch drive electrodes 204 in a same column, so as to form a plurality of touch drive lines 234. That is to say, each touch drive line 234 includes first touch drive electrodes 203 and second touch drive electrodes 204 in a same column. It is to be explained that different touch drive lines 234 are insulated from each other. The arrangement mode of the connection lines 51 in Fig.3b is merely for illustration, and embodiments of the present invention include but not limited to this showing.

The first touch drive electrodes 203 and the second touch drive electrodes 204 are both employed to apply common electrode signals and touch scan signals in a time-share manner.

As illustrated in Fig.2, a counter-substrate includes a plurality of touch sensing lines 310 and the plurality of touch sensing lines are disposed at positions, on the counter-substrate, corresponding to the first touch drive electrodes 203 of the array substrate 100.

In an in-cell touch panel provided in an embodiment of the present invention above, an array substrate is formed with a plurality of first touch drive electrodes that are insulated from each other, a plurality of second touch drive electrodes that are insulated from each other, and a plurality of connection lines. The size and shape of each second touch drive electrode is consistent with that of a first touch drive electrode. The plurality of connection lines respectively connect first touch drive electrodes and second touch drive electrodes in a same column, to form a plurality of touch drive lines. Because the in-cell touch panel provided in the embodiment of the present invention includes first touch drive electrodes and second touch drive electrodes, and the first touch drive electrodes and the second touch drive electrodes are equal in size and same in shape, with the first touch drive electrodes and the second touch drive electrodes being employed to apply common electrode signals and touch scan signals in a time-share manner, so that the signal transmission loads of these two kinds of drive electrodes are relatively close and the transmission speed of a common signal over the first touch drive electrodes is relatively closer to the transmission speed of a common signal over the second touch drive electrodes in a display time period as well, which can avoid a problem of nonuniform display of images and improve image quality.

With a time-share drive mode being employed in a touch period and a display period, in-cell touch panels provided in embodiments of the present invention can, on one hand, integrate a display drive chip and a touch drive chip to reduce manufacturing cost, and, on the other hand, reduce mutual interference between display and touch by the time-share drive mode, thus improving image quality and touch accuracy.

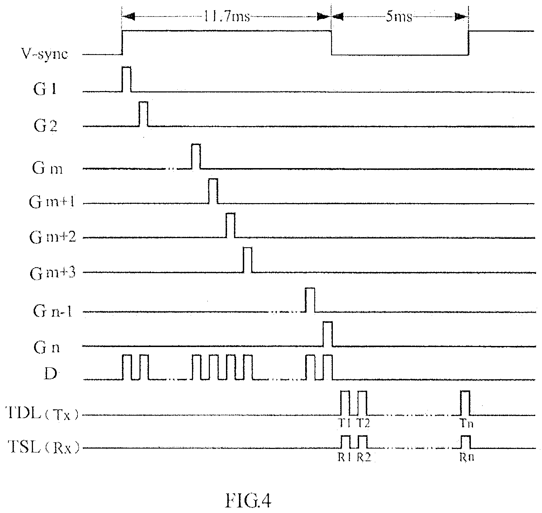

For example, in a drive timing drawing illustrated in Fig.4, the time period when a touch panel displays each frame is divided into a display time period and a touch time period. For example, in the time drawing illustrated in Fig.4, the time period when the touch panel displays one frame is 16.7 ms, of which 5 ms re selected for the touch time period and the rest 11.7 ms are selected for the display time period. Of course, according to processing capability of an 1C chip, the time duration of the touch time period and the time duration of the display time period may be adjusted as well, which is not limited herein. In the display time period, a gate scan signal is applied on each gate signal line (G1, G2 ...... Gn) in sequence, and gray-level signals are applied on data signal lines D, correspondingly; the touch driving lines (TDL) Tx in such a case are employed as a common electrode and are provided with a constant common electrode signal via an IC chip that is connected with the touch driving lines, so as to realize a liquid crystal display function. In the touch time period, the IC chip that is connected with touch drive lines supplies touch scan signals (T1, T2 ...... Tn) to touch driving line respectively, meanwhile touch sensing lines (TSL) Rx respectively detect touch sensing signals (R1, R2 ...... Rn), so as to realize a touch function. In the touch time period, each of gate electrode signal lines and data signal lines in the touch panel is not applied with a signal. For example, in a common electrode layer, at least another common electrode may be provided, and in the display time period and the touch time period, this common electrode is applied with a common electrode signal in a time-share manner.

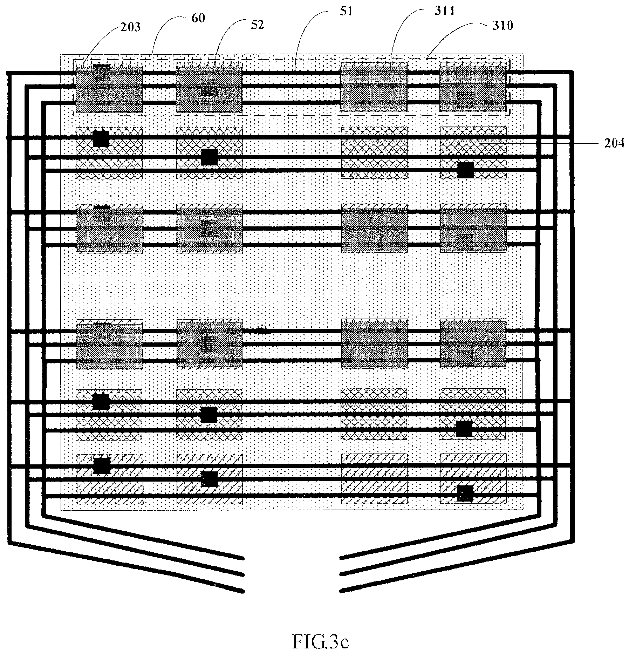

For example, an in-cell touch panel provided in an embodiment of the present invention, as illustrated in Fig.2 and Fig.3c, a counter-substrate 200 comprises a plurality of touch sensing lines 310 and each touch sensing line 310 comprises a plurality of touch sensing electrodes 311, and the touch sensing electrodes 311 are respectively provided at positions, corresponding to the first touch drive electrodes 203 in each row of an array substrate 100, of the counter-substrate 200. The touch sensing electrodes 311 are of a same shape and an equal size as the first touch drive electrodes 203. For viewing convenience, Fig.3c merely illustrates a part of touch sensing electrodes 311.

In the above in-cell touch panel provided in the embodiment of the present invention, two substrates are provided opposite to each other, a plurality of touch sensing electrodes is provided on an counter-substrate that is provided opposite to an array substrate, and the plurality of touch sensing electrodes are each provided at positions, corresponding to each of first touch drive electrodes in each row of the array substrate, of the counter-substrate, and the touch sensing electrodes are of a same shape and an equal size as the first touch drive electrodes. Because in the in-cell touch panel provided in the embodiment of the present invention, the counter-substrate that is provided opposite to the array substrate is provided with touch sensing electrodes that are of an equal size and a same shape, and the position of each touch sensing electrode corresponds to each of first touch electrodes in the array substrate, during touch and display the problem of nonuniform image display can be avoided and image quality is hence improved.

For example, in the technical solution provided in an embodiment of the present invention, transmittance compensation electrodes 320 may be provided at positions, corresponding to second touch drive electrodes 204, of a counter-substrate 200, and the transmittance compensation electrodes 320 are of a same shape and an equal size as second touch drive electrodes 204. So that patterns of both the transmittance compensation electrodes and the second touch drive electrodes can be simultaneously formed via merely a same mask.

For example, transmittance compensation electrodes can be disposed on a same layer as touch sensing electrodes, so that touch sensing electrodes can be formed in same one patterning process as transmittance compensation electrodes that are provided in a suspended manner, which can simplify technical processes and reduce manufacturing cost. Of course, transmittance compensation electrodes and touch sensing electrodes can be fabricated at different layers as well, which is not limited herein.

For example, in the technical solution provided in an embodiment of the present invention, first touch drive electrodes 203 and second touch drive electrodes 204 can be plate-like electrodes. So that no extra fabrication process is added in fabricating an array substrate, and patterns of first touch drive electrodes and second touch electrodes can be formed in one patterning process, which can reduce fabrication cost and increase additional value of a product.

For example, in the technical solution provided in an embodiment of the present invention, a row pitch of rows of second touch drive electrodes 204 can be same as a row pitch of rows of first touch drive electrodes 203.

In an embodiment of the present invention, a row pitch of rows of second touch drive electrodes 204 is the same as a row pitch of rows of first touch drive electrodes 203, so that no extra fabrication process is added in fabricating an array substrate, and patterns of first touch drive electrodes and second touch drive electrodes can be formed in one patterning process, which reduces fabricating cost and increases additional value of a product.

For example, in a technical solution provided in an embodiment of the present invention, a column pitch of columns of second touch drive electrodes 204 can be the same as a column pitch of columns of first touch drive electrodes 203. So that no extra patterning process is required in fabrication of an array substrate, instead, merely one mask which is formed with patterns of same arrangement rule is required and patterns of first touch drive electrodes and second touch drive electrodes can be formed at the same time in a patterning process, so that fabrication precision is increased, fabrication cost is reduced and additional value of a product is increased.

For example, in a technical solution provided in an embodiment of the present invention, second touch drive electrodes 204 can be provided on a same layer and made of same material as first touch drive electrodes 203. So that no extra fabrication process is added in fabrication of an array substrate, and patterns of the first touch drive electrodes and the second touch drive electrodes can be formed in one patterning process.

For example, in a technical solution provided in an embodiment of the present invention, second touch drive electrodes 204 and first touch drive electrodes 203 can be provided in a common electrode layer. So that no extra fabrication process is added in fabrication of an array substrate, and patterns of the first touch drive electrodes and the second touch drive electrodes as well as the common electrode layer can be formed in one patterning process, and more than one mask, which can reduce fabrication cost and increase additional value of a product.

For example, in the technical solution provided in an embodiment of the present invention, first touch drive electrodes 203 and second touch drive electrodes 204 are made of a transparent oxide material or a metal material. So that the first touch drive electrodes and the second touch drive electrodes can be formed at the same time as pixel electrodes and so on that are made of a transparent conductive oxide material, or as a gate metal layer or a source drain metal layer and so on that is made of a metal material in an array substrate, therefore no extra fabrication process is added in fabrication of the array substrate, and patterns of the first touch drive electrodes and the second touch drive electrodes can be formed in one patterning process, which can reduce fabrication cost and increase additional value of a product.

For example, to prevent touch sensing electrodes disposed on a counter substrate from blocking pixel units, touch sensing electrodes can be made of a transparent oxide material such as ITO or IZO, or a metal material. Resistance of the touch sensing electrodes can be effectively reduced if they are fabricated with a metal material.

For example, in the technical solution provided in an embodiment of the present invention, first touch drive electrodes 203 and second touch drive electrodes 204 are provided on a different layer from connection lines 51 and an insulation layer 60 (as illustrated in Fig.3c) is provided between a layer where the first touch drive electrodes 203 and the second touch drive electrodes 204 are located and a layer where the connection lines 51 are located, with the connection lines 51 being connected respectively with the first touch drive electrodes 203 and the second touch drive electrodes 204 by means of via holes 52 that run through the insulation layer.

For example, connection lines 51 can be made of a metal material.

Further, in practice, the above-mentioned in-cell touch panels, provided in embodiments of the present invention, can be applied to liquid crystal display panels of TN (Twisted Nematic) type, ADS (Advanced Dimension Switch) type, MADS (High-advanced Dimension Switch) type and IPS (In-plane Switch) type as well.

For example, if the above in-cell touch panels, provided in embodiments of the present invention, are applied to liquid crystal display panels of ADS type or HADS type, in order to simplify fabrication processes and reduce fabrication cost, a way that a common electrode layer provided on a lower substrate is reused as second touch drive electrodes can be employed. For example, second touch drive electrodes and first touch drive electrodes can constitute the common electrode layer provided on a side, facing the upper substrate, of the lower substrate. For example, in-cell touch panels can further include a touch chip (not illustrated in figures). The touch chip is employed to apply a common electrode signal to each of the first touch drive electrodes and each of the second touch drive electrodes in a display time period.

Generally, the resolution of a touch panel is at a millimeter order, and therefore, in practice, according to the touch resolution required, the distribution density and the occupied area of first touch drive electrodes and second touch drive electrodes can be selected to ensure the touch resolution required, while resolution of a display screen is usually at a micrometer order, so that a touch drive electrode unit usually corresponds to a plurality of pixels in the display screen.

Based on a same inventive concept, an embodiment of the present invention further provides a display device, which includes any of the above-mentioned in-cell touch panels provided in embodiments of the present invention.

For example, the display device can be any product or component having a display function such as a liquid display panel, a cell phone, a tablet computer, a TV set, a display, a laptop computer, a digital photo frame and a navigator. An implementation of the display device may refer to embodiments of the above in-cell touch panels and repeated contents will not be specified any more.

In an in-cell touch panel and a display device provided in embodiments of the present invention, an array substrate is provided with first touch drive electrodes and second touch drive electrodes that are of an equal size and a same shape. For example, a common electrode layer that would be connected over a whole surface in an array substrate is divided so as to form a plurality of the first touch drive electrodes and a plurality of the second touch drive electrodes that are provided alternately and insulated from each other, and each second touch drive electrode is consistent in size and shape with each first touch drive electrode. The embodiments of the present invention allows signal transmission load (namely, resistance of routed lines (connection lines)) of the first touch drive electrodes and the second touch drive electrodes comparatively close, and the transmission speed of the common signal over the first touch drive electrodes become relatively close to the transmission speed of the second touch drive electrodes in a display time period, which can avoid a problem of nonuniform image display due to inconsistent load between the first touch drive electrodes and the second touch drive electrodes in an in-cell touch panel, and hence can improve image quality.

It is understandable for those skilled in the art that figures merely illustrate a preferable embodiment, and modules or processes in figures are not prerequisites for implementing the present invention.

What are described above is related to the illustrative embodiments of the disclosure only and not limitative to the scope of the disclosure. The scopes of the disclosure are defined by the accompanying claims.

This application claims the benefit of Chinese patent application No.201510221655.6 filed in China on May 4, 2015, which is incorporated by reference herein as a part of this application.

## Claims

1. An in-cell touch panel, comprising an array substrate and a counter-substrate that is provided opposite to the array substrate,
wherein the array substrate comprises:
an array of first touch drive electrodes that are insulated from each other;
an array of second touch drive electrodes that are insulated from each other, wherein the array of the second touch drive electrodes is insulated from the array of the first touch drive electrodes, rows of the first touch drive electrodes and rows of the second touch drive electrodes are provided alternately one by one in a column direction, and the second touch drive electrodes are same in shape and equal in size with the first touch drive electrodes; and
a plurality of connection lines, wherein the plurality of the connection lines respectively connect the first touch drive electrodes and the second touch drive electrodes in a same column to form a plurality of touch drive lines, and the first touch drive electrodes and the second touch drive electrodes are employed to apply a common electrode signal and a touch scan signal in a time-share manner;
the counter-substrate comprises:
a plurality of touch sensing lines, wherein the plurality of the touch sensing lines are provided at positions, corresponding to the first touch drive electrodes, of the counter-substrate.

2. The in-cell touch panel according to claim 1, wherein each touch sensing line comprises a plurality of touch sensing electrodes, and the touch sensing electrodes are respectively provided at positions, corresponding to the first touch drive electrodes in each row, of the counter-substrate, and the touch sensing electrodes are same in shape and equal in size with the first touch drive electrodes.

3. The in-cell touch panel according to claim 1 or claim 2, wherein transmittance compensation electrodes are provided at positions, corresponding to the second touch drive electrodes, on the counter-substrate, and the transmittance compensation electrodes and the second touch drive electrodes are same in shape and equal in size.

4. The in-cell touch panel according to any one of claims 1-3, wherein the first touch drive electrodes and the second touch drive electrodes are plate-like electrodes.

5. The in-cell touch panel according to any one of claims 1-4, wherein a row pitch between rows of the second touch drive electrode is the same as a row pitch between rows of the first touch drive electrode.

6. The in-cell touch panel according to any one of claims 1-5, wherein a column pitch between columns of the second touch drive electrode is the same as a column pitch between columns of the first touch drive electrode.

7. The in-cell touch panel according to any one of claims 1-6, wherein the second touch drive electrodes are disposed on a same layer and of a same material as the first touch drive electrodes.

8. The in-cell touch panel according to claim 7, wherein the first touch drive electrodes and the second touch drive electrodes are formed of a transparent conductive oxide material or a metal material.

9. The in-cell touch panel according to any one of claims 1-8, wherein the first touch drive electrodes and the second touch drive electrodes are provided on a layer different from the connection lines.

10. The in-ccll touch panel according to claim 9, wherein an insulation layer is provided between a layer where the first touch drive electrodes and the second touch drive electrodes are located and a layer where the connection lines are located, and the connection lines are connected respectively with the first touch drive electrodes and the second touch drive electrodes by means of via holes that run through the insulation layer.

11. A display device, comprising the in-cell touch panel according to any one of claims 1-10.
